# EUROPÄISCHE PATENTSCHRIFT

(11) **EP 0 328 792 B1**
(45) Veröffentlichungstag und Bekanntmachung des Hinweises auf die Patenterteilung: **10.11.1993**
(21) Anmeldenummer: 88202351.8
(22) Anmeldetag: 21.10.1988
(51) Int. Cl.: B23Q 3/06

(54) **Mehrfach-Spannvorrichtung**
Multiple clamping device
Dispositif de serrage multiple

(30) Priorität: 05.01.1988 CH 17/88
(43) Veröffentlichungstag der Anmeldung: 23.08.1989
(73) Patentinhaber: Mirkovic, Zivorad, CH-8212 Neuhausen am Rheinfall (CH)
(72) Erfinder: Mirkovic, Zivorad, CH-8212 Neuhausen am Rheinfall (CH)
(74) Vertreter: Wiedmer, Edwin, Dr.

(56) Entgegenhaltungen:
- CH-A- 460 668
- DE-A- 3 237 705
- DE-B- 2 453 249
- DE-U- 1 815 274
- DE-U- 1 846 198
- DE-U- 1 983 371
- GB-A- 2 178 985
- PATENT ABSTRACTS OF JAPAN Band 9, Nr. 249 (M-419)(1972), 5. Oktober 1985 ; & JP-A-6099537 (FUJI KOUGU SEISAKUSHO K.K.)

## Beschreibung

Die Erfindung betrifft eine Mehrfachspannvorrichtung für zu bearbeitende Werkstücke gemäss dem Oberbegriff des Patentanspruches 1.

Zur Fertigung von Maschinenteilen kommen bei Werkzeugmaschinen die verschiedenartigsten Spannmittel zum Einsatz. Für kleine und relativ einfache Werkstücke benutzt man Spannstücke oder spannstockartige Normvorrichtungen, gegebenenfalls in Verbindung mit Sonderspannbacken und diversen Zusatzgeräten. Für die Fertigung grösserer Serien sind diese Spannmittel jedoch weniger geeignet.

Für Werkstücke, die sich wegen ihrer Grösse und Form im üblichen Spannstock nicht einspannen lassen, müssen dem Werkstück entsprechend angepasste, aufwendige Sonderspannvorrichtungen hergestellt werden.

An Werkzeugmaschinen, insbesondere für NC-gesteuerte Maschinen, werden zum mittelbaren oder unmittelbaren Aufspannen der Werkstücke und der Spannvorrichtungen Spannschrauben verwendet, die in T-förmige bzw. schwalbenschwanzförmige Nuten der Maschinentische eingeschoben werden.

Bei der Fertigung von grösseren Serien können in begrenztem Ausmass besonders geformte und angepasste Spannmittel auf dem Spanntisch zum Einsatz kommen, so dass beispielsweise drei Werkstücke gleichzeitig eingespannt werden können.

Ein Nachteil dabei besteht insbesondere darin, dass besondere Spannmittel einen grossen Platzbedarf erfordern, sowie lange Einrichtzeiten und längere Verlustzeiten für den Werkzeugwechsel unvermeidbar sind.

Aus der DE-32 37 705 A1 ist eine Mehrfach-Spannvorrichtung für Werkzeugmaschinen bekannt, die eine auf dem Maschinentisch fixierbare Spanneinheit aufweist, die auf ihrer Oberseite mit einer Anzahl parallel verlaufender Keilnuten ausgebildet ist, quer über die ein Spannbock verläuft, gegen den von beiden Seiten Werkstücke mit Hilfe von Spannstücken festgespannt werden können. Jedes dieser Spannstücke weist auf seiner dem Spannbock zugewandten Seite eine Spannbacke auf, die mit Hilfe einer Keilspannschräge nach unten und in Richtung auf den Spannbock zu verschiebbar ist, um jeweils ein Werkstück gegen den Spannbock einzuspannen. Der Spannbock und die Spannendstücke darstellenden Spannstücke lassen sich mit Hilfe von Schrauben in der Keilnut fixieren, eh die Werkstücke durch Verschiebung der Spannbacken festgespannt werden.

Der Erfindung liegt die Aufgabe zugrunde, im Sinne einer besseren Ausnutzung der Fläche des Maschinentisches eine Mehrfachspannvorrichtung dahingehend zu verbessern, dass sich eine grössere Anzahl von Werkstücken gleichzeitig festspannen lässt, wobei ein genaues und ein schnelles Aufspannen der Spannteile gewährleistet sein soll.

Diese Aufgabe wird durch die im Anspruch 1 angegebenen Merkmale gelöst, Weiterbildungen der Erfindung sind in den Unteransprüchen gekennzeichnet.

Die erfindungsgemässe Spannvorrichtung ist universell zur Fertigung grösserer Werkstückserien geeignet und insbesondere für NC-gesteuerte Werkzeugmaschinen verwendbar. Sie ist ohne weitere Hilfsmittel einfach an unterschiedliche Formen und Grössen der Werkstücke anpassbar und erlaubt ein schnelles Aufspannen mehrerer Werkstücke zur gleichzeitigen Bearbeitung ohne besondere Zusatzgeräte und ohne andere Hilfsmittel und ermöglicht stets eine optimale Ausnützung der Maschinentischfläche sowohl in axialer als auch in radialer Richtung.

Ein besonderer Vorteil besteht darin, dass auf das Führungsachsenpaar zwischen dem gelagerten Spannbock und dem Spannendstück mehrere Spannstücke eingesetzt werden können, so dass in axialer Richtung soviel Werkstücke eingespannt werden können, dass die gesamt vorhandene Maschinentischlänge voll ausgenützt werden kann, wobei erforderlicherfalls lediglich die verschieden langen Führungsachsen ausgewechselt werden müssen. Auf dem Maschinentisch können je nach Grösse und Form der zu bearbeitenden Werkstücke in Längsrichtung, parallel zur ersten Mehrfach-Spannvorrichtung, weitere Spannvorrichtungen derselben Art angeordnet werden, so dass die Tischfläche in jeder Richtung optimal ausgenützt werden kann.

Durch das ermöglichte einfache und schnelle Aufspannen der erfindungsgemässen Vorrichtungen werden die Einricht- und Verlustzeiten, verbunden mit dem erforderlichen Werkzeugwechsel, wesentlich herabgesetzt, da die einzelnen Spannteile der Spanneinheit bereits vorher ausserhalb der Werkzeug maschine auf das Führungsachsen paar aufgeschoben, positioniert und fixiert werden. Bei der Werkstückbearbeitung auf NC-gesteuerten Werkzeugmaschinen kann für alle eingespannten Werkstücke das gleiche Programm benützt werden.

Für kompliziertere Werkstücke können in vorteilhafter Weise zum Aufspannen derselben mindestens zwei parallel zueinander und radial zum Maschinentisch angeordnete MehrfachSpannvorrichtungen kombiniert werden, ohne dass Sonderspannvorrichtungen entwickelt und hergestellt werden müssen.

Dadurch, dass die aus Spannbock, Zwischenspannstücken und Spannendstück bestehende Spanneinheit zusätzlich beidseitig angeordnete Spannflächen aufweist, kann die Aufspannung am Maschinentisch mittels auf die Spannflächen angreifenden Spannbriden auch in jeder zum Maschinentisch schrägen Position erfolgen.

In der Zeichnung ist ein Ausführungsbeispiel der Erfindung schematisch dargestellt.

Es zeigen
Fig.1 einen Längsschnitt durch eine erfindungsgemässe Mehrfach-Spannvorrichtung,
Fig.2 einen Grundriss der Spannvorrichtung gemäss Fig.1, und
Fig.3 eine Stirnansicht der Spannvorrichtung gemäss der Pfeile A in den Fig.1 und 2 .

Gleiche Teile des Erfindungsgegenstandes sind in den Figuren mit denselben Bezugszeichen versehen.

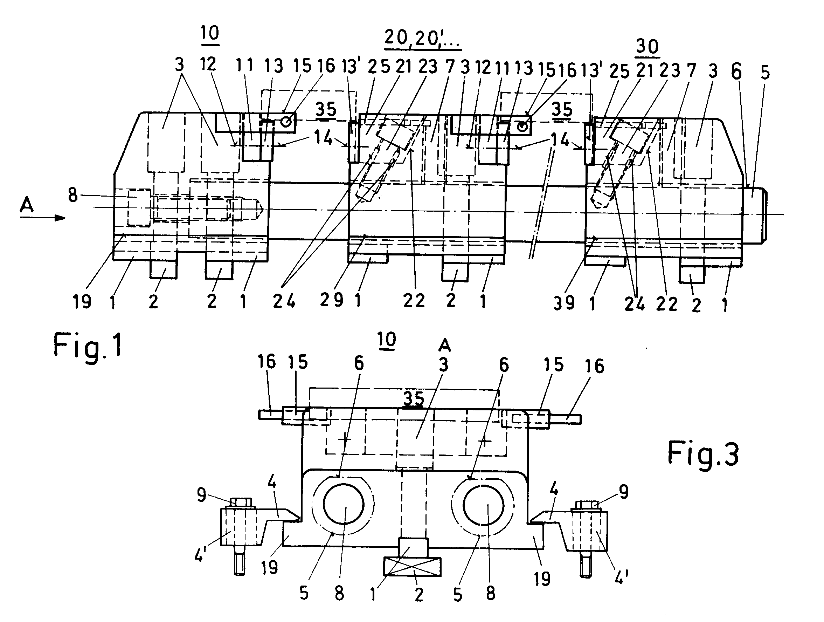

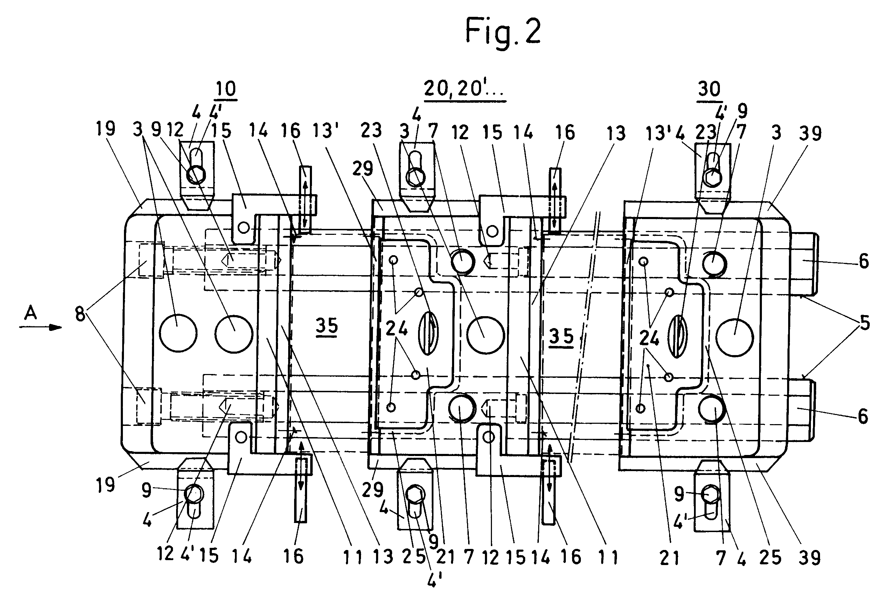

Fig.1, 2 und 3 zeigen in verschiedenen Ansichten eine Mehrfach-Spannvorrichtung, die aus einem Spannbock 10, mindestens einem Spannstück 20,20',... und einem Spann-Endstück 30 besteht und zusammen mit einem Führungsachsenpaar 5 , eine Spanneinheit 5;10;20,20',...;30 bildet. Der Spannbock 10 wird auf einem (nicht dargestellten) Maschinentisch fest gelagert und mittels je einer Befestigungsschraube 8 werden die beiden austauschbar ausgebildeten Führungsachsen 5 gehalten. Die Spannstücke 20,20',... bzw. das Spann-Endstück 30 sind über das Führungsachsenpaar 5 längsverschiebbar einstellbar, wobei die Führungsachsen 5 über deren Gesamtlänge nach oben hin eine abgeflachte Auflagefläche 6 aufweisen. Die Spannstücke 20,20',... und das Spann-Endstück 30 sind mittels Arretierschrauben 7 durch Angreifen an die abgeflachten Teile 6 der Führungsachsen 5 fixierbar ausgebildet.

Die Führungsachsen 5 können entsprechend der axialen Länge der Werkzeugmaschine ausgetauscht werden, so dass die Spanneinheit 5;10;20,20',...;30 unabhängig von der Länge des Maschinentisches optimal einsetzbar ist.

Die einzelnen Spannteile 10;20,20',,,,;30 sind über Nutensteine 1 in Tischnuten geführt bzw. können mittels der T-Nutensteine 2 und der Spannschrauben 3 auf den Maschinentisch aufgespannt werden, wobei beispielsweise der Spannbock 10 mittels zwei Spannschrauben 3 aufgespannt werden kann, um eine einwandfreie Halterung von Werkstücken 35 zu gewährleisten.

Innenstirnseitig und oberhalb der gesamten Breite des Spannbockes 10 ist zur Halterung des Werkstückes 35 eine Haltebacke 11 auf einer Unterlage 13 starr angeordnet. Jedes Spannstück 20,20',... ist einmal stirnseitig axial zum Spannbock 10 bzw. zum vorhergehenden Spannstück 20,20',... mit einer als Spannplatte mit einer Keilspannschräge 22 ausgebildeten Spannbacke 21 und mit einer, eine Ausnehmung aufweisenden Unterlage 13' versehen, wobei die Spannbacke 21 durch vier Federn 24, vorzugsweise Wendelfedern, abgefedert ist, und zum anderen stirnseitig axial zum Spann-Endstück 30 analog zum Spannbock 10 mit daran starr angeordneter Haltebacke 11 mit der Unterlage 13 verbunden. Die Federn 24 der Spannbacken 21 erleichtern ein genaues Einspannen und Ausspannen der fertig bearbeiteten Werkstücke 35. Das Spann-Endstück 30 weist innenstirnseitig axial zum letzten Spannstück 20,20',... ebenfalls die abgefederte Spannbacke 21 mit der mit einer Ausnehmung versehenen Unterlage 13' auf. Die starren Haltebacken 11 sind durch Schrauben 12 - der Uebersichtlichkeit halber nur durch Schraubenachsen angedeutet - am Spannbockkörper 10 bzw. am Spannstück-Körper 20,20',..., sowie die Unterlagen 13, bzw.13' durch Schrauben 14 - angedeutet wie vorstehend - jeweils an der Haltebacke 11 bzw. an der Spannbacke 21 befestigt.

Die abgefederten Spannbacken 21 sind durch schräg nach unten verlaufende Spannschrauben 23 und durch die Keilspannschräge 22 axial zum Werkstück 35 spannbar. Der Spannbock 10 und die Spannstücke 20,20',... weisen beidseitig des Führungspaares 5 je einen Anschlaghalter 15 mit radial verstellbaren Anschlägen 16 auf, die vorzugsweise als Stifte ausgebildet sind und zur Einstellung der Werkstücke 35 in radialer Richtung dienen.

Zwischen der als Spannplatte keilförmig ausgebildeten Spannbacke 21 und dem Spannstück-Körper 20,20'... bzw. dem Spann-Endstück-Körper 30 ist jeweils ein O-Ring 25 angeordnet, so dass eine Reinhaltung der Spanneinheit 5;10;20,20',...;30 auch während des Betriebes gewährleistet ist.

Durch die wählbare Länge der Führungsachsen 5 kann die Spanneinheit 5;10;20,20'...;30 jeweils der gesamten zur Verfügung stehenden Tischlänge der Werkzeugmaschine angepasst werden. Je nach Grösse und Form der zu bearbeitenden Werkstücke 35 können zusätzliche Mehrfach-Spannvorrichtungen 5;10;20,20',...;30 parallel zueinander und radial zum Maschinentisch angeordnet werden, so dass dessen optimale Ausnützung stets gewährleistet ist.

Der Spannbock 10, die Spannstücke 20,20',... und das Spann-Endstück 30 sind derart ausgebildet, dass auch eine zum Maschinentisch beliebige Schrägaufspannung möglich ist, indem jedes dieser Spannteile 10;20,20',...;30 in Axialrichtung beidseitig Spannflächen 19,29,39 aufweist. Mittels auf die Spannflächen 19,29,39 angreifenden Spannbriden 4 ist die Spanneinheit 5;10;20,20',...;30 durch Schlitze 4' der Spannbriden 4 geführte Spannelemente 9, beispielsweise durch Schraubenmuttern, mit den in den Tischnuten geführten T-Nutensteinen auf dem Maschinentisch fixierbar.

In den Fig.1 bis 3 sind sowohl die Spannschrauben 3 als auch die Spannelemente 9 mit den Spannbriden 4 dargestellt. In der Regel ist jede Spanneinheit 5;10;20,20',...;30 entweder mittels Spannschrauben 3 oder mittels auf die Spannflächen 19,29,39 angreifenden Spannbriden 4 mit den in den Tischnuten geführten T-Nutensteinen 2 fixierbar. Bei besonderen Werkstückformen ist jedoch auch von Vorteil die Fixierung der Spanneinheit 5;10;20,20',...;30 kombiniert teilweise mit Spannschrauben 3 und teilweise mittels Spannbriden 4 mit Spanelementen 9 vorzunehmen, wodurch eine Anfertigung von kostenaufwendigen Sonderspannmitteln vermieden wird.

### Aufstellung der verwendeten Bezugszeichen

- 1: Nutensteine
- 2: T-Nutensteine
- 3: Spannschrauben, vertikal verlaufende
- 4: Spannbriden
- 4': Schlitze
- 5: Führungsachsenpaar
- 6: Auflageflächen
- 7: Arretierschrauben
- 8: Befestigungsschrauben
- 9: Spannelemente, z.B. Schraubenmuttern
- 10: Spannbock
- 11: Haltebacken
- 12: Schrauben (nur durch Schraubenachsen angedeutet)
- 13,13': Unterlagen
- 14: Schrauben (nur durch Schraubenachsen angedeutet)
- 15: Anschlaghalter
- 16: Anschläge, vorzugsweise Stifte
- 17:
- 18:
- 19: Spannflächen, ebene, zum Spannen des Spannbockes mittels Spannbriden
- 20,20',...: Spannstücke (dargestellt nur 20)
- 21: Spannbacken
- 22: Keilspannschrägen
- 23: Spannschrauben, schräg verlaufende
- 24: Federn, vorzugsweise Wendelfedern
- 25: O-Ring
- 26:
- 27:
- 28:
- 29: Spannflächen, ebene, zum Spannen der Spannstücke mittels Spannbriden
- 30: Spann-Endstück
- 5;10;20,20',...;30: Spanneinheit
- 35: Werkstücke (strichliert angedeutet)
- 39: Spannflächen, ebene, zum Spannen des Spann-Endstückes mittels Spannbriden

## Patentansprüche

1. Mehrfach-Spannvorrichtung für spanabhebende und/oder abrasive Werkzeugmaschinen, insbesondere zum Spannen in Nuten des Maschinentisches von NC-Werkzeugmaschinen, mit einer Spanneinheit aus drei, in einer gemeinsamen Führung gelagerten, fixierbaren Spannteilen (30,10,30), von denen zwei als Spannstücke (30) mit über eine Keilfläche verstellbarer Spannbacke (21) zum Festspannen von Werkstücken (35) und das dritte als ein Gegenlager (10) für eingespannte Werkstücke (35) darstellender Spannbock (10) ausgebildet sind, und zum Fixieren am Maschinentisch die Spannteile (10;20,20',...;30) Spannmittel (1,2,3 und/oder 4,4',9;19,29,39) aufweisen,
dadurch gekennzeichnet,
dass die Führung ein Führungsachsenpaar (5) aufweist, an welchem der Spannbock (10) starr gelagert ist und die Führungsachsen (5) jeweils eine abgeplattete Auflagefläche (6) aufweisen, auf denen die Spannstücke (20, 20',...;30) längsverschiebbar und mittels auf den Auflageflächen (6) stumpf anliegenden Arretierschrauben (7) fixierbar sind, und der Spannbock (10) ein Endlager mit einer Gegenlagerfläche (11,13) bildet, dass die Spannstücke (20,20',...;30) auf derselben Seite des Spannbockes (10) angeordnet sind und eines von ihnen als Spannendstück (30) ausgebildet ist, zwischen dem und dem Spannbock (10) mindestens ein weiteres, auf der Spannbacke (21) des Spannbockes (10) gegenüberliegenden Seite eine Gegenlagerfläche (11,13) aufweisendes Zwischenspannstück (20,20',...) angeordnet ist derart, dass auch zwischen diesen Spannstücken (20,20',...;30) je ein Werkstück (35) einspannbar ist, wobei die Spannbacke (21) jedes Zwischenspannstückes (20,20',...) sowie des Spannendstückes (30) mit einer eine Ausnehmung aufweisenden Unterlage (13') versehen ist, in welche eine schräg nach unten verlaufende Spannschraube (23) geführt ist, mittels derer, die Spannbacke (21) entlang der Keilspannschräge (22) axial zum Werkstück (35) spannbarist.

2. Spannvorrichtung nach Anspruch 1, dadurch gekennzeichnet, dass das Führungsachsenpaar (5) austauschbar und im Spannbock (10) durch je eine Befestigungsschraube (8) fixierbar ist.

3. Spannvorrichtung nach Anspruch 1, dadurch gekennzeichnet, dass der Spannbock (10) innenstirnseitig zum ersten Zwischenspannstück (20) eine starre Haltebacke (11) mit einer Unterlage (13) und jedes Zwischenspannstück (20,20',...) stirnseitig axial zum Spannbock (10) bzw. zum vorhergehenden Zwischenspannstück (20,20',...) die als abgefederte Spannplatte ausgebildete Spannbacke (21), stirnseitig axial zum Spannendstück (30) eine Haltebacke (11) mit Unterlage (13) aufweist und dass am Spannendstück (30) innenstirnseitig parallel zum Zwischenspannstück (20,20',...) eine abgefederte Spannbacke (21) mit der Unterlage (13') angeordnet ist.

4. Spannvorrichtung nach Anspruch 1 oder 3, dadurch gekennzeichnet, dass zwischen der keilförmigen, als Spannplatte ausgebildeten Spannbacke (21) und dem Zwischenspannstückkörper (20,20',...) bzw. dem Spannendstück (30) ein O-Ring (25) angeordnet ist, und dass ferner jede Spannbacke (21) vier Federn, vorzugsweise Wendelfedern (24) aufweist.

5. Spannvorrichtung nach einem der Ansprüche 1 bis 4, dadurch gekennzeichnet, dass der Spannbock (10) und die Zwischenspannstücke (20,20',...) beidseitig des Führungsachsenpaares (5) je einen Anschlaghalter (15) mit einem radial verstellbaren Anschlag (16) aufweisen.

6. Spannvorrichtung nach Anspruch 1, dadurch gekennzeichnet, dass zum Fixieren der Spanneinheit (5;10;20, 20',...;30) am Maschinentisch die Spannmittel als vertikal verlaufende mit den in den Tischnuten geführten T-Nutensteinen (2) versehenen Spannschrauben (3) ausgebildet sind.

7. Spannvorrichtung nach Anspruch 1, dadurch gekennzeichnet, dass zum Fixieren der Spanneinheit (5;10;20, 20',...;30) am Maschinentisch die Spannteile (10;20, 20',...;30) beidseitig in Axialrichtung verlaufende Spannflächen (19,29,39) aufweisen und die Spannmittel als auf die Spannflächen (19,29,39) angreifenden mit Spannelementen (9), vorzugsweise Schraubenmuttern, versehenen Spannbriden (4) ausgebildet sind.

8. Spannvorrichtung nach Anspruch 7, dadurch gekennzeichnet, dass mindestens eine Spanneinheit (5;10;20, 20',...;30) mittels auf Spannflächen (19,29,39) angreifenden Spannbriden (4) schräg zum Maschinentisch angeordnet ist.

9. Spannvorrichtung nach Anspruch 6 oder 7, dadurch gekennzeichnet, dass mindestens zwei Spanneinheiten (5;10; 20,20',...;30) parallel zueinander radial zum Maschinentisch angeordnet sind.

## Claims

1. A multiple clamping device for machine cutting and/or grinding tools, in particular for clamping to keyways in tables of NC machine tools, including a clamping unit consisting of three adjustable clamping components (30,10,30), arranged in a common guideway, two of which are designed as clamps (30) including a jaw (21) adjustable by a tapered surface to clamp work pieces (35), and the third designed as a counter support (10) for the clamped work pieces (35), being a clamping block (10) consisting of clamping components (10;20,20',...;30), and clamping devices (1,2,3 and/or 4,4' ,9;19,29,39) for fixing to the machine table,
characterized in that
the guideway consists of a guiding axle pair (5) rigidly supporting the clamping block (10), with the guiding axles (5) each having a flattened support area (6) on which the clamps (20,20',...;30) may be fixed and which clamps are longitudinally adjustable by means of locking bolts (7) abutting the support areas (6), with the clamping block (10) forming an end support having a counter support area (11,13), with the clamping pieces (20,20',...;30) being arranged on the same side of the clamping block (10) and with one of them designed as a clamping end piece (30) between which and the clamping block (10) there is at least one other intermediate clamp (20,20',...;30), which has a counter support (11, 13) on the side opposite to the jaw (11) of the clamping block (10), is arranged in a way that between these clamps (20,20',...;30) one work piece (35) may be clamped, with the jaw (21) of each intermediate clamp (20,20'...) and the clamping end piece (30) having a recessed support (13') into which a clamping bolt (23) diagonally arranged towards the bottom, is inserted, by which the jaw (21) may be clamped along the tapered clamping diagonal (22) in axial direction to the work piece (35).

2. A clamping device according to Claim 1, characterized in that the guiding axle pair (5) is exchangeable, and each can be fixed in the clamping block (10) by one fixing bolt (8).

3. A clamping device according to Claim 1, characterized in that the clamping block (10) includes a rigid clamping jaw (11) and a support (13), a jaw (21) arranged on the internal face of the first intermediate clamp (20) and each intermediate clamp (20,20',...) on its side facing in axial direction towards the clamping block (10) and/or to the previous intermediate clamp (20,20',...), jaw (21) being a sprung clamping plate, each intermediate clamp including a retention jaw (11) and a support (13) on side facing in axial direction towards the clamping end piece (30) and that a sprung jaw (21) and support (13') is arranged on the clamping end piece (30) on its internal face, parallel to the intermediate clamp (20,20',...).

4. A clamping device according to Claims 1 or 3, characterized in that an O-ring (25) is arranged between the tapered jaw (21), being a clamping plate and the intermediate clamp body (20,20',...) and/or the clamping end piece (30) and that in addition each jaw (21) includes four springs, preferably helical springs (24).

5. A clamping device according to one of Claims 1 to 4, characterized in that the clamping block (10) and the intermediate clamps (20,20',...) include on both sides of the guiding axle pair (5) a stop holder (15) and a radially adjustable stop (16).

6. A clamping device according to Claim 1, characterized in that the clamping devices are designed as vertical devices including clamping bolts (3) located in T-keyway blocks (2) in the table keyways to fix the clamping unit (5;10;20,20',...;30) to the machine table.

7. A clamping device according to Claim 1, characterized in that the clamping unit (5;10;20,20',...;30) includes clamping surfaces (19,29,39) extending axially on both sides for fixing the clamping unit (5;10;20,20',...;30) to the machine table, and the clamping devices are designed with clamping components (9), preferably clips (4) including threaded nuts engaging in the clamping surfaces (19,29,39).

8. A clamping device according to Claim 7, characterized in that at least one clamping unit (5;10;20,20',...;30) is located transversely to the machine table by clips (4) engaging on the clamping surfaces (19,29,39).

9. A clamping device according to Claims 6 or 7, characterized in that at least two clamping units (5;10;20,20',...;30) are arranged parallel to one another in radial direction to the machine table.

## Revendications

1. Dispositif d'ablocage multiple pour machinesoutils opérant par enlèvement de copeaux et/ou par abrasion, en particulier pour l'ablocage dans des rainures de la table des machines-outils à commande numérique, comprenant une unité d'ablocage composée de trois pièces de serrage (30, 10, 30) montées dans un guidage commun et pouvant être immobilisées, dont deux constituent des pièces de serrage (30) munies d'une mâchoire de serrage (21) pouvant être réglée sur une surface de coin, qui sert à l'ablocage de pièces (35) tandis que la troisième constitue un chevalet (10) qui constitue un butoir (10) pour les pièces (35) abloquées, et les pièces de serrage (10 ; 20, 20', ... ; 30) présentent, pour la fixation sur la table de la machine, les moyens de serrage (1, 2, 3 et/ou 4, 4', 9 ; 19, 29, 39),
caractérisé
en ce que le guidage comprend une paire d'axes de guidage (5) sur laquelle le chevalet (10) est monté rigidement et les axes de guidage (5) présentent chacun une surface de portée méplate (6) sur laquelle les pièces de serrage (20, 20', ... ; 30) peuvent être déplacées en translation longitudinale et immobilisées au moyen de vis d'arrêt (7) qui portent en bout sur les surfaces de portée (6), et le chevalet (10) forme un butoir terminal muni d'une surface de butoir (11, 13), en ce que les pièces de serrage (20, 20', ... ; 30) sont disposées sur le même côté du chevalet (10), et l'une d'elles constitue une pièce de serrage d'extrémité (30), entre laquelle et le chevalet (10) est disposée au moins une autre pièce de serrage intermédiaire (20, 20', ...) une surface de butoir (11, 13) sur le côté qui fait face au chevalet (10), de telle sorte qu'une pièce (35) peut aussi être abloquée dans chaque intervalle entre ces pièces de serrage (20, 20', ... ; 30), la mâchoire de serrage (21) de chaque pièce de serrage intermédiaire (20, 20', ...) ainsi que de la pièce de serrage d'extrémité (30) étant munie d'une embase (13') présentant un évidement et dans lequel est enfilée une vis de serrage (23) s'étendant obliquement vers le bas et au moyen de laquelle la mâchoire de serrage (21) peut être serrée axialement contre la pièce (35) le long de la rampe de serrage en coin (22).

2. Dispositif d'ablocage selon la revendication 1, caractérisé en ce que la paire d'axes de guidage (5) est interchangeable et peut être immobilisée dans le chevalet (10) au moyen d'une fixation (8) pour chaque axe.

3. Dispositif d'ablocage selon la revendication 1, caractérisé en ce que le chevalet (10) présente, sur le côté frontal intérieur, en direction de la première pièce de serrage intermédiaire (20), une mâchoire de serrage rigide (11) munie d'une embase (13), et chaque pièce de serrage intermédiaire (20, 20', ...) présente, sur son côté frontal, en direction axiale du chevalet (10) ou de la pièce de serrage intermédiaire précédente (20, 20', ...), une mâchoire de serrage (21) constituée par une plaque de serrage suspendue élastiquement, et sur son côté frontal, en direction axiale de la pièce de serrage d'extrémité (30), une mâchoire de fixation (11) munie d'une embase (13) et en ce que, sur la pièce de serrage d'extrémité (30) est disposée, sur le côté frontal intérieur, parallèlement à la pièce de serrage intermédiaire (20, 20', ...), une mâchoire de serrage suspendue élastiquement (21) munie de l'embase (13').

4. Dispositif d'ablocage selon la revendication 1 ou 3, caractérisé en ce qu'une bague torique (25) est disposée entre la mâchoire de serrage (21) en forme de coin, constituant une plaque de serrage, et le corps (20, 20', ...) de la pièce de serrage, ou la pièce de serrage d'extrémité (30), et en ce qu'en outre, chaque mâchoire de serrage (21) présente quatre ressorts, de préférence des ressorts hélicoïdaux (24).

5. Dispositif d'ablocage selon une des revendications 1 à 4, caractérisé en ce que le chevalet (10) et les pièces de serrage intermédiaires (20, 20', ...), présentent, de chaque côté de la paire d'axes de guidage (5), un porte-butée (15) muni d'une butée (13) réglable dans la direction radiale.

6. Dispositif d'ablocage selon la revendication 1, caractérisé en ce que, pour immobiliser l'unité d'ablocage (5 ; 10 ; 20, 20', ... ; 30) sur la table de serrage, les moyens de serrage sont constitués par des vis de serrage (3) orientées verticalement, munies des coulisseaux de rainures en T (2) qui sont guidés dans les rainures de la table.

7. Dispositif d'ablocage selon la revendication 1, caractérisé en ce que, pour fixer l'unité d'ablocage (5 ; 10 ; 20, 20', ... ; 30) sur la table de travail, les éléments de serrage (10 ; 20, 20', ... ; 30) présentent des deux côtés des surfaces de serrage (19, 29, 39) s'étendant dans la direction axiale et les moyens de serrage sont constitués par des brides (20) munies d'éléments de serrage (9), de préférence d'écrous de vis, qui attaquent les surfaces de serrage (19, 29, 39).

8. Dispositif d'ablocage selon la revendication 7, caractérisé en ce qu'au moins une unité d'ablocage (5 ; 10 ; 20, 20', ... ; 30) est agencée obliquement par rapport à la table de la machine, à l'aide de brides (4) qui attaquent des surfaces de serrage (19, 29, 39).

9. Dispositif d'ablocage selon la revendication 6 ou 7, caractérisé en ce qu'au moins deux unités d'ablocage (5 ; 10 ; 20, 20', ... ; 30) sont disposées parallèlement entre elles, dans la direction radiale par rapport à la table de la machine.
